(19) **Europäisches Patentamt / European Patent Office / Office européen des brevets**

(11) **EP 4 752 827 A1**

(12) # EUROPEAN PATENT APPLICATION

(43) Date of publication:
**03.06.2026 Bulletin 2026/23**

(21) Application number: **24307009.1**

(22) Date of filing: **02.12.2024**

(51) International Patent Classification (IPC):
**G06T 5/70** $^{(2024.01)}$

(52) Cooperative Patent Classification (CPC):
**G06T 5/70;** G06T 2207/10016; G06T 2207/20052;
G06T 2207/20204

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
- **DE LAGRANGE, Philippe
  35830 BETTON (FR)**
- **URBAN, Fabrice
  35235 THORIGNE-FOUILLARD (FR)**
- **LEFEBVRE, Frederic
  35000 RENNES (FR)**
- **AMEUR, Zoubida
  35510 CESSON-SEVIGNE (FR)**

(74) Representative: **Vossius & Partner
Patentanwälte Rechtsanwälte mbB
Siebertstraße 3
81675 München (DE)**

(54) **FILM GRAIN SYNTHESIS FREQUENCY SHAPING**

(57)     Systems, methods, and instrumentalities are disclosed for film grain synthesis frequency shaping. As described herein, a device may include a processor that is configured to perform one or more of the following. The device may obtain a model parameter set. The model parameter set may be, or may include, a cutoff frequency. Based on the model parameter set (e.g., the cutoff frequency), the device may generate a soft frequency window. The soft frequency window may be at least one of a 2D low-pass window, a separable 2D low-pass window, or a low-pass 20 frequency window. The device may generate a synthetic grain based on the soft frequency window. For example, the device may generate the synthetic grain based on (e.g., applying) an inverse transform of the soft frequency window. The inverse transform may be associated with a discrete cosine transform (DCT).

Fill a 16x16 DCT2 array with gaussian random numbers of standard deviation « sigma »

↓

Set coefficients with column and row indices lower than horizontal and vertical low cutoff frequencies to zero

↓

Set coefficients with column or row indices either higher than horizontal or vertical high cutoff frequencies to zero

↓

Perform inverse 16x16 DCT2

↓

**FIG. 7**

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for film grain synthesis frequency shaping. As described herein, a device may include a processor that is configured to perform one or more of the following.

The device may obtain a model parameter set. In examples, the device may obtain a model parameter set via video data. In examples, the device may obtain the model parameter set in a film grain characteristics (FGC) supplemental enhancement information (SEI) message. The model parameter set may be, or may include, a cutoff frequency. The model parameter set may further be, or may further include, amplitude or a scaling factor.

The device may generate a soft frequency window based on the model parameter set. In examples, the soft frequency window may be a 2D low-pass window. In examples, the soft frequency window may be a separable 2D low-pass window. The separable 2D low-pass window may include a 1D low-pass window (e.g., a first 1D low-pass window) that is associated with a vertical dimension and another 1D low-pass window (e.g., a second 1D low-pass window) that is associated with a horizontal dimension. The separable 2D low-pass window may be obtained based on vector multiplication of the first 1D low-pass window and the second 1D low-pass window. In examples, the soft frequency window comprises at least one of a cosine window, a raised cosine window, a Kaiser window, a Butterworth window, and/or the like. In examples, the soft frequency window is a low-pass 2D frequency window. The low-pass 2D frequency window may be obtained based on at least one of vector multiplication of a first 1D low-pass frequency window and a second 1D low-pass window as described herein or based on a multivariate base function.

The device may generate a synthetic grain based on the soft frequency window. For example, the device may generate the synthetic grain based on (e.g., applying it using element-wise multiplication) the soft frequency window and a 2D array of coefficients (e.g., random coefficients) and performing an inverse transform. The inverse transform may be associated with a discrete cosine transform (DCT).

In examples, an energy associated with the soft frequency window may be the same as an energy associated with a rectangular frequency window with the same cutoff frequency.

In examples, the device may determine that a non-zero low cutoff frequency is obtained (e.g., included, signaled, specified, and/or the like) based on the model parameter set. Based on the determination that the non-zero low cutoff frequency is obtained, the device may generate a low-pass 2D window (e.g., a first low-pass 2D window) from a cutoff frequency (e.g., a first cutoff frequency). The first cutoff frequency may be associated with a high cutoff frequency. The device may generate another low-pass 2D window (e.g., a second low-pass 2D window) from another cutoff frequency (e.g., a second cutoff frequency). The second cutoff frequency may be associated with a low cutoff frequency. The device may generate a 2D frequency window based on the first low-pass 2D window and the second low-pass 2D window, wherein the 2D frequency window is obtained based on the differences (e.g., square root of) between squares of the first low-pass 2D window and the second low-pass 2D window.

In examples, the device may determine that a non-zero low cutoff frequency is obtained (e.g., included, signaled, specified, and/or the like) based on the model parameter set. Based on the determination that the non-zero low cutoff frequency is obtained, the device may generate a 2D frequency window based on a multivariate base function.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows an example of film grain statistical coding (e.g., modeling and/or synthesis).
FIG. 5 shows examples of film grain characteristics (FGC) supplemental enhancement information (SEI) parameters.
FIG. 6 shows an example pseudocode to generate a film grain pattern, e.g., with zero coefficients out of cutoff frequencies and an inverse discrete cosine transform (DCT) transform.

FIG. 7 shows an example flowchart to generate a film grain pattern, e.g., with zero coefficients out of cutoff frequencies and an inverse DCT transform.

FIG. 8 shows visual examples with various cutoff frequencies.

FIG. 9 shows an example of a comparison of synthetic grain using a rectangular window (e.g., left) with a real film scan (e.g., right).

FIG. 10 shows examples of soft frequency windows (e.g., natural and squared).

FIG. 11 shows an example 2D soft frequency window (e.g., compared to a rectangular window): natural (top) and squared (bottom).

FIG. 12 shows an example visual improvement of synthetic grain from a soft frequency window.

FIG. 13 shows an example derivation of a bandpass or a high-pass 2D window.


## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

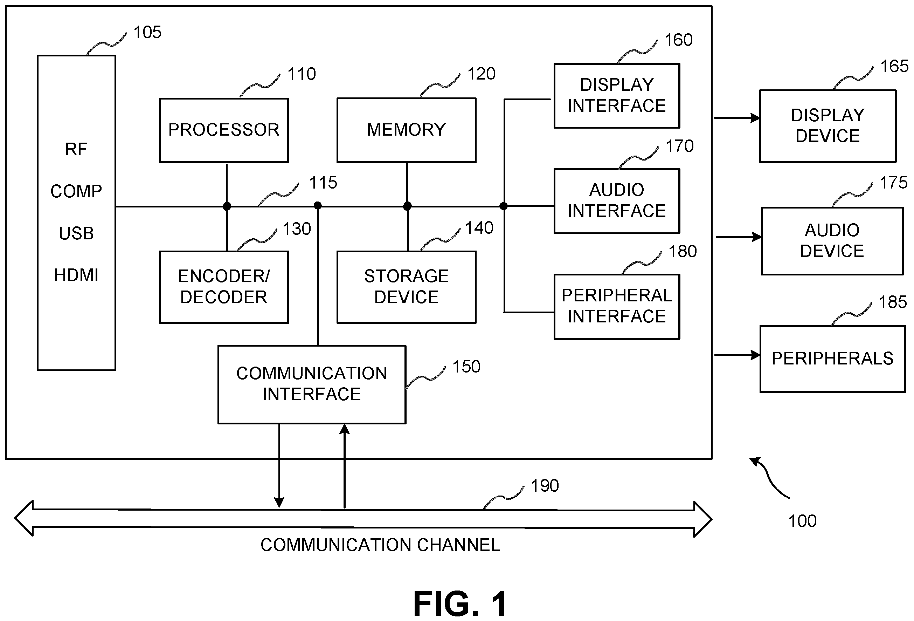

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g., cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

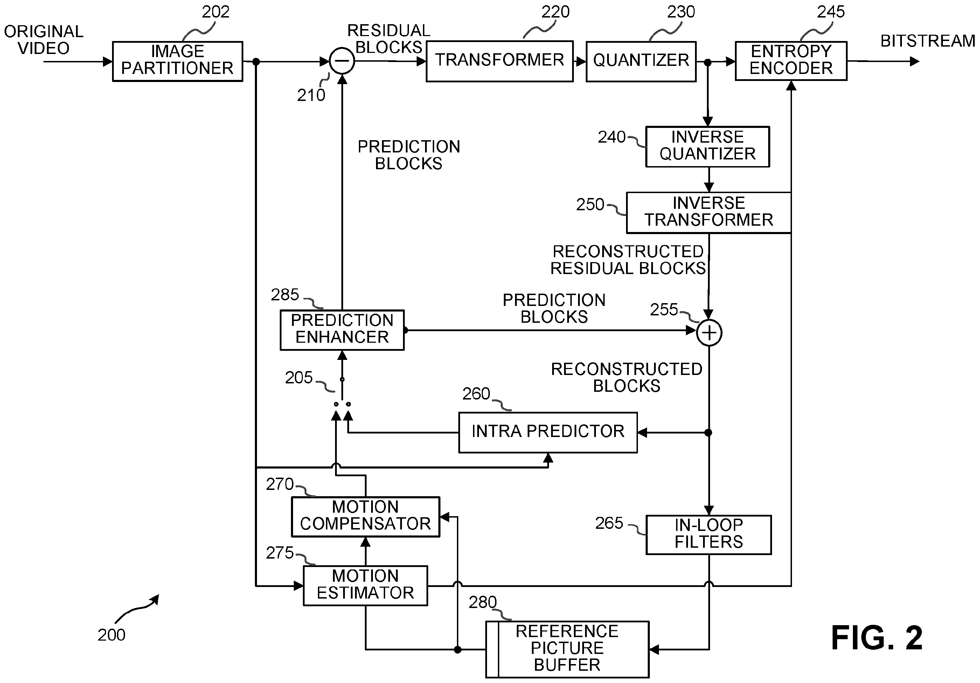

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

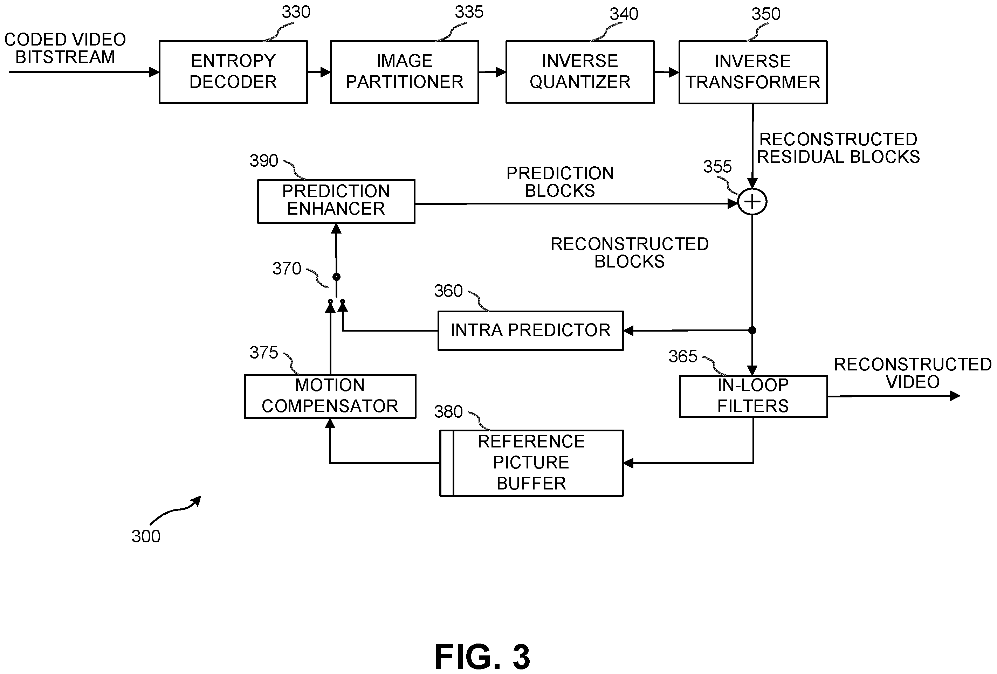

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g., by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for film grain synthesis frequency shaping. As described herein, a device may include a processor that is configured to perform one or more of the following.

The device may obtain a model parameter set. In examples, the device may obtain a model parameter set via video data. In examples, the device may obtain the model parameter set in a film grain characteristics (FGC) supplemental enhancement information (SEI) message. The model parameter set may be, or may include, a cutoff frequency. The model parameter set may further be, or may further include, amplitude or a scaling factor.

The device may generate a soft frequency window based on the model parameter set. In examples, the soft frequency window may be a 2D low-pass window. In examples, the soft frequency window may be a separable 2D low-pass window. The separable 2D low-pass window may include a 1D low-pass window (e.g., a first 1D low-pass window) that is associated with a vertical dimension and another 1D low-pass window (e.g., a second 1D low-pass window) that is associated with a horizontal dimension. The separable 2D low-pass window may be obtained based on vector multiplication of the first 1D low-pass window and the second 1D low-pass window. In examples, the soft frequency window comprises at least one of a cosine window, a raised cosine window, a Kaiser window, a Butterworth window, and/or the like. In examples, the soft frequency window is a low-pass 2D frequency window. The low-pass 2D frequency window may be obtained based on at least one of vector multiplication of a first 1D low-pass frequency window and a second 1D low-pass window as described herein or based on a multivariate base function.

The device may generate a synthetic grain based on the soft frequency window. For example, the device may generate the synthetic grain based on (e.g., applying it using element-wise multiplication) the soft frequency window and a 2D array of coefficients (e.g., random coefficients) and performing an inverse transform. The inverse transform may be associated with a discrete cosine transform (DCT).

In examples, an energy associated with the soft frequency window may be the same as an energy associated with a rectangular frequency window with the same cutoff frequency.

In examples, the device may determine that a non-zero low cutoff frequency is obtained (e.g., included, signaled, specified, and/or the like) based on the model parameter set. Based on the determination that the non-zero low cutoff frequency is obtained, the device may generate a low-pass 2D window (e.g., a first low-pass 2D window) from a cutoff frequency (e.g., a first cutoff frequency). The first cutoff frequency may be associated with a high cutoff frequency. The device may generate another low-pass 2D window (e.g., a second low-pass 2D window) from another cutoff frequency (e.g., a second cutoff frequency). The second cutoff frequency may be associated with a low cutoff frequency. The device may generate a 2D frequency window based on the first low-pass 2D window and the second low-pass 2D window, wherein the 2D frequency window is obtained based on the differences (e.g., square root of) between squares of the first low-pass 2D window and the second low-pass 2D window.

In examples, the device may determine that a non-zero low cutoff frequency is obtained (e.g., included, signaled, specified, and/or the like) based on the model parameter set. Based on the determination that the non-zero low cutoff frequency is obtained, the device may generate a 2D frequency window based on a multivariate base function.

The synthesis of film grain may be configured to be blended with a target picture. One or more examples described herein may be configured. In examples, the synthesis of film grain may hide artifacts present in the pictures decoded from a compressed video stream. In examples, the synthesis of film grain may create a look similar to the original picture where film grain is present but which has to be denoised for better video compression efficiency or that has film grain removed due to video compression itself.

Film grain may be difficult to preserve (e.g., may actually be very difficult to preserve) through video compression at reasonable bit rates, e.g., due to the lack of temporal and/or spatial consistency that are key to video compression efficiency. Video encoders may be (e.g., very) efficient denoisers, e.g., especially with recent standards, as video compression gains come at the price of removing noise.

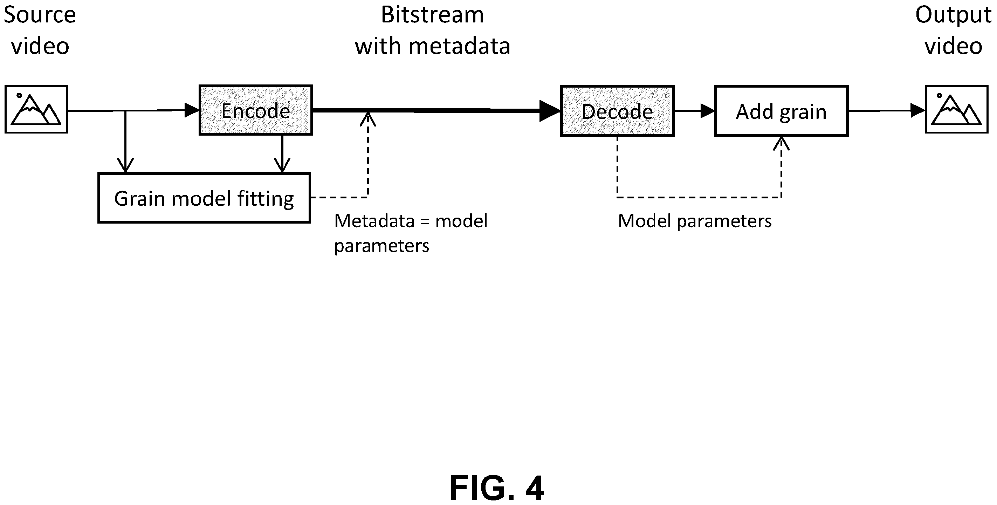

One example to preserve film grain may be to use statistical encoding, e.g., instead of and/or in addition to native video encoding as pixels. The use of statistical encoding may involve defining a statistical model that may represent film grain, finding model parameters fitting the characteristics of the grain that is removed by video compression, conveying model parameters in the video bitstream, and/or synthesizing film grain accordingly after video decoding, as illustrated in FIG. 4. A (e.g., each step) as illustrated in FIG. 4 may have an impact on grain fidelity. FIG. 4 illustrates an example of film grain statistical coding (e.g., modeling and/or synthesis).

In examples, a film grain characteristics (FGC) SEI message may be configured and/or be used to represent grain statistics and transmit them and/or be inserted into video data, such as bitstreams.

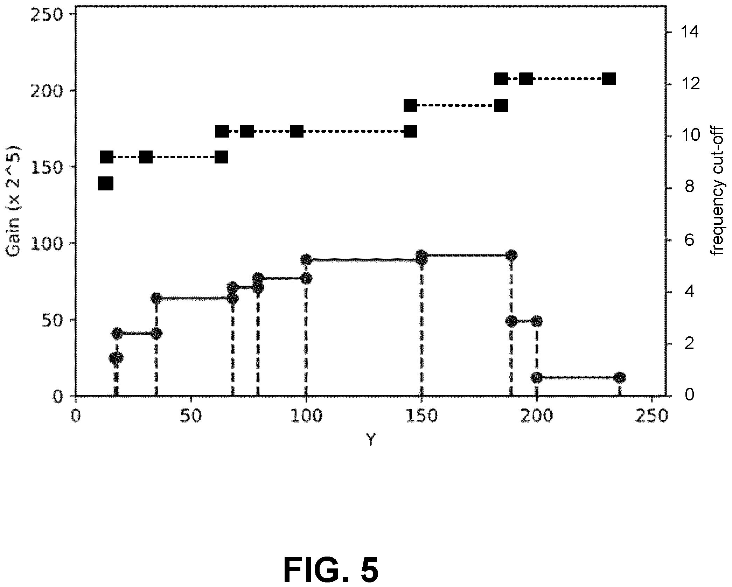

As the film grain aspect is based on (e.g., depends on) light exposure, the grain may be different in light and dark areas, e.g., in terms of amplitude and/or texture (e.g., coarse or fine). The FGC SEI message may have the capability of representing this variability, e.g., by defining intensity intervals (e.g., matching luma values of a decoded picture), and for an (e.g., each) interval, grain amplitude and texture properties as illustrated in FIG. 5. FIG. 5 illustrates examples of FGC SEI parameters. For example, as illustrated in FIG. 5, the grain amplitude may be represented by black lines with round dots, and texture variation (e.g., cut-off frequency) may be represented by dotted lines with square dots, e.g., as a function of image luminance, with intervals delimited by dashed lines (e.g., a similar model may be applied to other color components with different parameters).

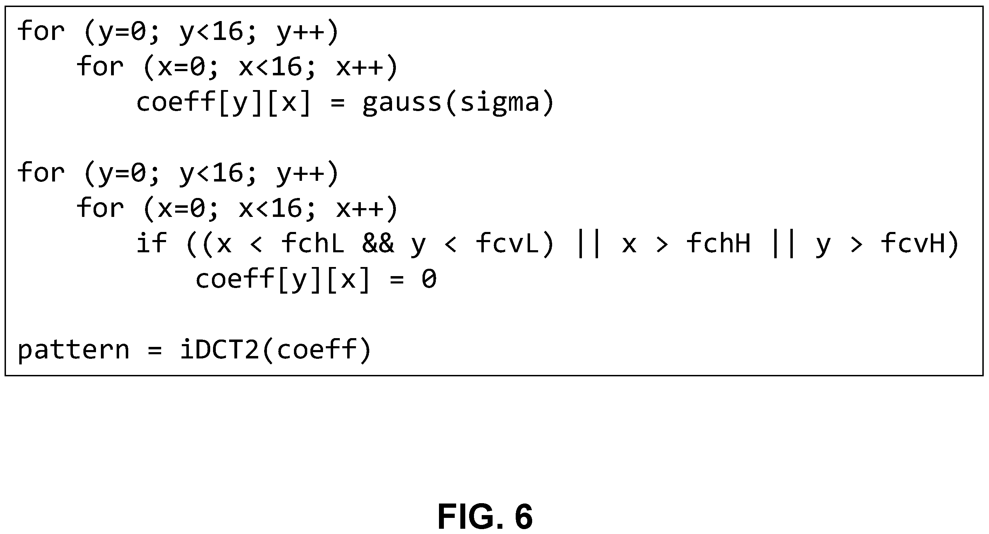

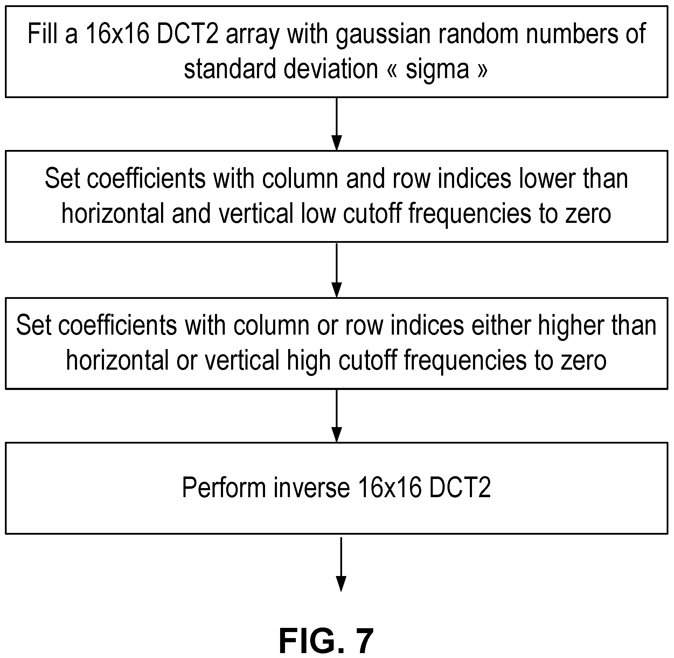

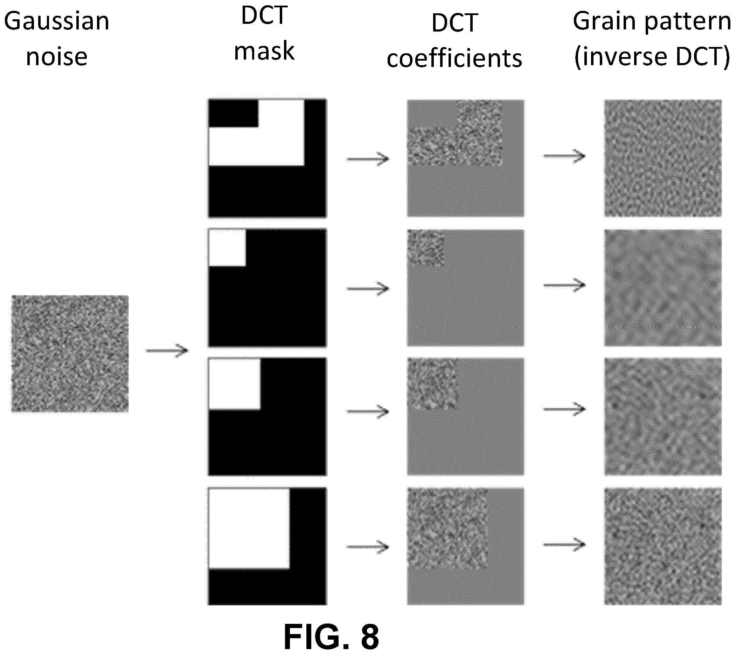

The FGC SEI message may define grain texture properties, e.g., using auto-regressive spatial filter coefficients (e.g., called auto-regressive mode) or spatial frequency cutoffs (e.g., called frequency filtering mode), both applicable to a white Gaussian noise. In frequency-filtering mode, vertical, horizontal, low, and high cutoff frequencies may be specified and transmitted in video data (e.g., such as the bitstream), e.g., in addition to and/or instead of grain amplitude (e.g., or scaling factor), e.g., for an (e.g., each) intensity interval. The parameters may represent a hypothetical synthetic grain that may be generated by filling a 16x16 discrete cosine transform (DCT) block with Gaussian random noise of the given amplitude, forcing to zero DCT coefficients out of the given frequency cutoffs, and/or performing the 2-dimensional (D) inverse DCT. Example pseudocode may be illustrated in FIG. 6. FIG. 7 may provide an example flowchart. The process may be adapted to different DCT block sizes. Visual examples with a 64x64 DCT block may be illustrated in FIG. 8. As described herein, FIG. 6 illustrates an example pseudocode to generate a film grain pattern, e.g., with zero coefficients out of cutoff frequencies and an inverse DCT transform. FIG. 7 illustrates an example flowchart to generate a film grain pattern, e.g., with zero coefficients out of cutoff frequencies and an inverse DCT transform. As described herein and illustrated in FIG. 7, the device may be configured to generate a synthetic grain based on the soft frequency window. For example, the device may generate the synthetic grain based on (e.g., applying it using element-wise multiplication) the soft frequency window and a 2D array of coefficients (e.g., random coefficients) and performing an inverse transform. The inverse transform may be associated with a DCT. In examples, the device may be configured to fill a NxN DCT2 array with Gaussian. The device may be configured to apply the 2D frequency window (e.g., multiply element-wise the window with DCT array values. The device may be configured to perform inverse DCT2. FIG. 8 illustrates visual examples with various cutoff frequencies.

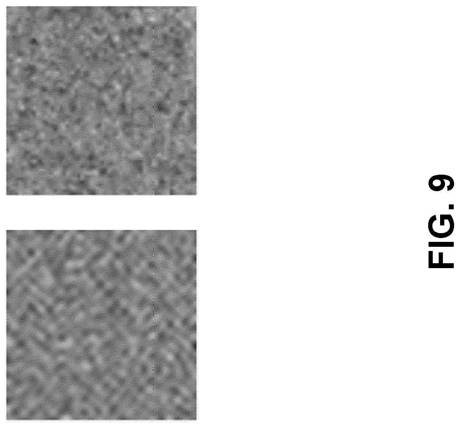

The similarity of synthetic grain to natural film grain may be configured if (e.g., when) representing the grain by Gaussian noise and spatial frequency cutoffs. As described herein and as illustrated in FIG. 6 and FIG. 7, DCT coefficients out of the pass band may be set to zero, e.g., which is equivalent to a rectangular frequency window. As shown in FIG. 9, this may generate a recognizable texture that looks different from natural film grain, e.g., especially for low cut-off frequencies (e.g., see FIG. 8 where diagonal structures may be visible for low cutoff frequencies). FIG. 9 illustrates a comparison of synthetic grain using a rectangular window (e.g., left) with a real film scan (e.g., right).

As described herein, a soft frequency window may be applied and/or configured (e.g., instead of) a rectangular (e.g., a brick wall) window to generate synthetic grain from white noise and spatial cutoff frequencies. The application of a soft frequency window may result in a synthetic grain that looks more similar to natural film grain.

Synthetic grain may be generated from white noise and spatial cutoff frequencies by applying a soft frequency window, e.g., before the inverse frequency transform. One or more of the following may be configured: a low-pass frequency window may be defined that is based on (e.g., depends on) a frequency cutoff; frequency cutoff and grain variance reflecting the DCT-based description of the FGC SEI message may be obtained by designing the window to have the same energy as a rectangular window; a 2D low-pass window may be generated by combining two 1D low-pass windows, e.g., one for each direction (e.g., horizontal/vertical direction) and/or be defined directly using a function with 2 parametric variables and/or by resampling a 2D mask; and/or low frequency cutoffs (e.g., a high-pass filter) may be implemented by subtracting (e.g., subtracting the squares and taking the square root as described herein) a low-pass window with the low cutoff frequencies, e.g., to the 2D low-pass window obtained.

For example, a low-pass frequency window may be defined that is based on (e.g., depends on) a frequency cutoff and may be non-normative, fixed (e.g., as described herein), or indicated in video data (e.g., the bitstream) using a syntax element.

The configuration described herein may not be restricted to FGC SEI and the informative synthesis process. For example, the configuration described herein may apply to a different grain model, e.g., to frequency cutoffs that are not necessarily DCT-referred (e.g., may refer to other transforms or frequency definitions), to model parameters transmitted by other means (e.g., including in picture header), and/or to a normative synthesis process with strict conformance.

A frequency window (e.g., a soft frequency window) may be configured and/or generated. For example, a low-pass frequency window may be defined for a (e.g., each) dimension (e.g., horizontal and vertical) that is based on (e.g., depends on) a cutoff frequency and/or with an energy (e.g., sum of squares) equal to a rectangular window with the same cutoff frequency. As described herein, the frequency window may be generated based on a model parameter set. The model parameter set may be, or may include a cutoff frequency. The model parameter set may be obtained in video data, such as a bitstream. The model parameter set may be obtained in an FGC SEI message. As described herein, the model parameter set may include other information, such as amplitude information and/or a scaling factor.

Examples of a frequency window (e.g., a soft frequency window) may be a cosine window, a raised cosine window, a Kaiser window, a Butterworth window, and/or the like.

The frequency window may be configured to one or more of the following: with normalized spatial frequency f defined in the range 0 to 1 and with cutoff frequency $f_c$ between 0 and 1; the energy of the rectangular window may be equal to $\int_0^{f_c} (1)^2 \cdot df = f_c$ ; a frequency window $w(x)$ may be defined; a frequency scaling factor a may be chosen so that $\int_0^1 \big(w(a.f)\big)^2 \cdot df = f_c$ ; and/or the final frequency window may be $w(a.f)$.

An example frequency window $w(x)$ may be associated with and/or may be the cosine window. The cosine window may be defined as Eq. 1.

$$w(x) = \cos\left(x \cdot \frac{\pi}{2}\right) \text{ for } |x| \leq 1, 0 \text{ otherwise} \qquad \text{Eq. 1}$$

To adjust the match of the resulting grain with a rectangular window, $w(x)$ may include a factor $K$ (e.g., that may be based on and/or depend on $f_c$). For example, the cosine window may be modified as Eq. 2.

$$w(x) = K.\cos\left(x.\frac{\pi}{2}\right) \text{ for } |x| \leq 1, 0 \text{ otherwise} \qquad \text{Eq. 2}$$

Example values of $K$ may be 1.2, $\frac{\sqrt{5}}{2}$, 1.1, and/or the like.

The same process may be applied (e.g., may still be applied) to choose a frequency scaling factor a that results in

$$\int_0^1 \left(w(a.f)\right)^2 . df = f_c$$

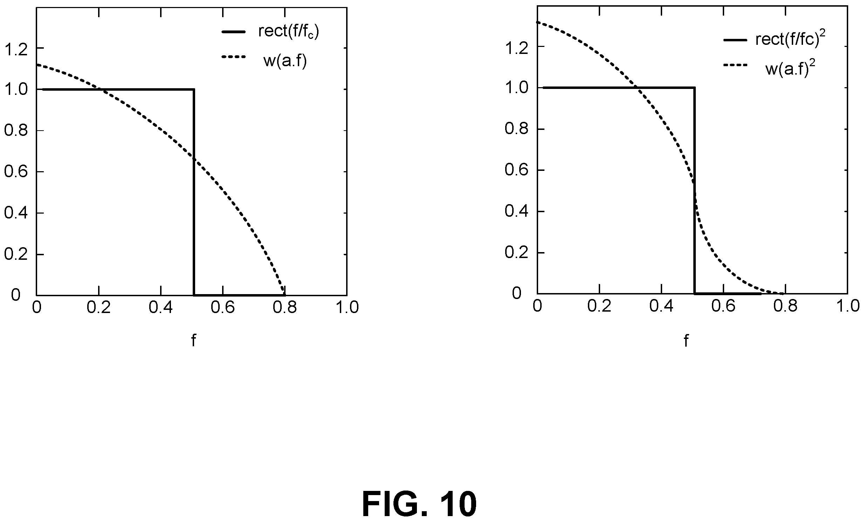

An example using an adjusted cosine window may be illustrated in FIG. 10. For example, FIG. 10 illustrates examples of soft frequency windows (e.g., natural and squared).

In examples, the frequency scaling factor a may be chosen, e.g., so that $\int_0^x \left(w(a.f)\right)^2 . df = f_c$ . x may be lower than 1 and may be based on (e.g., depend on) $f_c$ (e.g., min(1, $f_c$*1.1) or min(1, $f_c$*1.5)).

In examples, the frequency scaling factor a may be chosen, e.g., so that $\int_0^1 G(f) . \left(w(a.f)\right)^2 . df = f_c$ . G(f) may be a weighting function, e.g., tuned to match human perception.

In examples, the frequency scaling factor a may be adjusted (e.g., may be further adjusted), e.g., by multiplying it by 0.95 or 0.9, etc. (e.g., after the energy matching process).

In examples, the window scaling factor $K$ may be adjusted (e.g., may be further adjusted), e.g., by multiplying it by 1.1 or 1.15, etc. (e.g., after the energy matching process).

In examples, the type of frequency window and/or parameters of the frequency window may be transmitted in video data (e.g., a video bitstream) or by other means to the device that synthesizes film grain. For example, an index may be transmitted (e.g., may be first transmitted) that defines the function to be used from a predetermined table (e.g., 0: cosine, 1: rectangular, 2: Butterworth). A scaling factor may be transmitted as a floating-point value between 0.5 and 2.0. Other parameters may be transmitted based on (e.g., depending on) the type of the frequency window (e.g., β parameter for a Kaiser window, order for a Butterworth window, etc.).

A 2D frequency window may be configured. The low-pass 2D frequency window (e.g., mask to be applied to DCT coefficients) $w_2(f_h, f_v)$ may be obtained (e.g., generated) by vector multiplication, e.g., multiplying the vertical window function $w(a_v f_v)$ with the horizontal one $w(a_h f_h)$ according to Eq. 3.

$$w_2(f_h, f_v) = w(a_h f_h).w(a_v f_v) \qquad \text{Eq. 3}$$

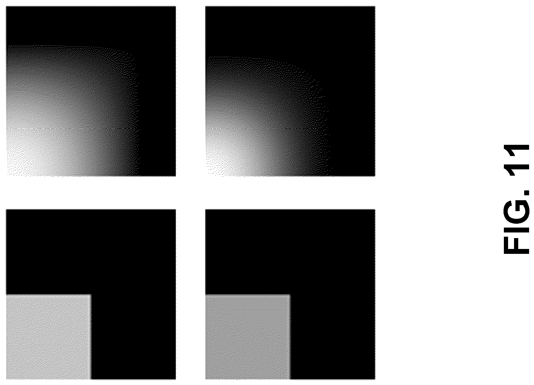

FIG. 11 illustrates an example 2D soft frequency window (e.g., compared to a rectangular window): natural (top) and squared (bottom).

In examples, the 2D frequency window may be obtained (e.g., obtained directly) from a multivariate base function.

The energy (e.g., sum of squares) of the 2D window function may be associated with/related to (e.g., equal to) the energy of the rectangular window. The energy of the rectangular window may be $f_{cv}. f_{ch}$ (e.g., with $f_{cv}$ and $f_{ch}$ the vertical and horizontal cutoff frequencies, respectively).

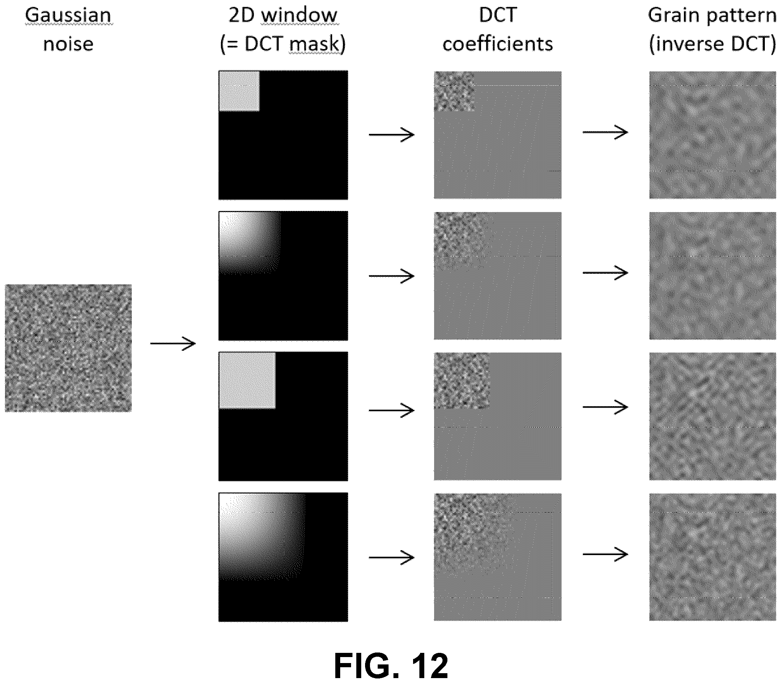

FIG. 12 illustrates the visual improvement of synthetic grain if (e.g., when) using an adjusted cosine window (e.g., instead of a rectangular one). For example, FIG. 12 illustrates an example visual improvement of synthetic grain from a soft frequency window.

High-pass (e.g., low cutoff frequencies) may be configured. If non-zero low cutoff frequencies are specified (e.g., signaled, included in video data/the bitstream, such as in the model parameter), the final 2D window function may be obtained by (e.g., first) generating a first low-pass 2D window $w_1(f_h, f_v)$ from high cutoff frequencies, generating a second low-pass 2D window $w_2(f_h, f_v)$ from low cutoff frequencies, and/or computing the square root of the difference of squares from the second to first 2D window according to Eq. 4.

$$w(f_h, f_v) = \sqrt{w_1(f_h, f_v)^2 - w_2(f_h, f_v)^2} \qquad \text{Eq. 4}$$

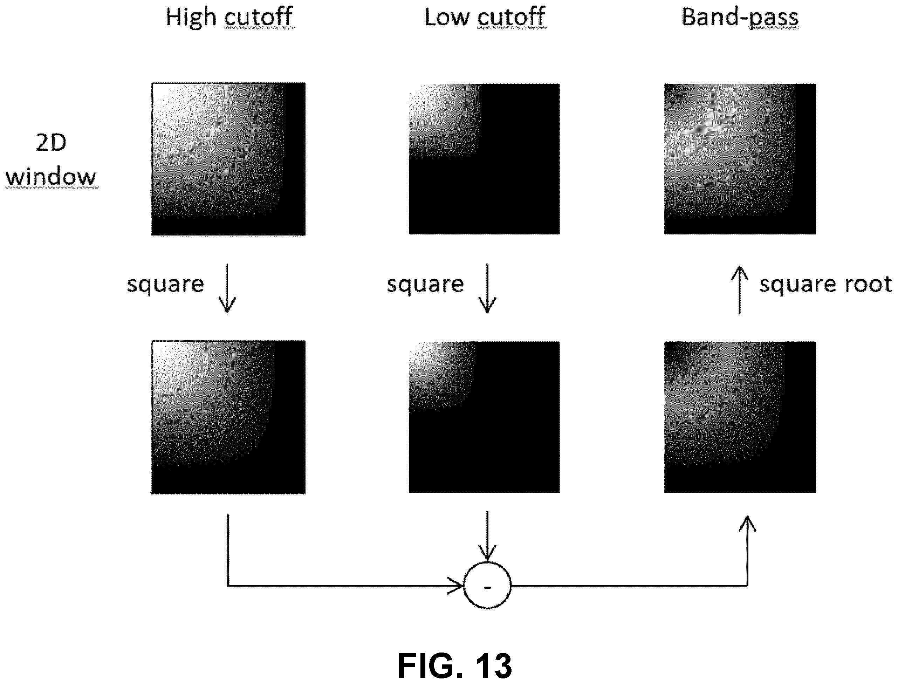

A graphical representation of the process may be illustrated in FIG. 13. For example, FIG. 13 illustrates an example derivation of a bandpass or a high-pass 2D window.

In examples, the final 2D frequency window may be obtained (e.g., obtained directly) from a multivariate base function based on (e.g., depending on) low and high cutoff frequencies.

The energy (e.g., sum of squares) of the 2D window function may be associated with/related to (e.g., equal to) the energy of the rectangular window. The energy of the rectangular window may be equal to ($f_{cvH} \cdot f_{chH} - f_{cvL} \cdot f_{chL}$), with $f_{..H}$ and $f_{..L}$ the high and low vertical or horizontal cutoff frequencies, respectively.

The examples described herein may be configured to and/or used for one or more of the following: compressed video rendering; statistical coding of film grain, e.g., in replacement of or in combination with native video coding; and/or creative image effects.

For example, the examples described herein may be configured to mask compression artifacts and/or restore the original look/artistic intent.

The following may be a non-exhaustive list of embodiments that may or may not be claimed.

A device for video decoding may include a processor. The processor may be configured to perform one or more of the following.

The device may obtain a model parameter set. In examples, the device may obtain a model parameter set via video data. In examples, the device may obtain the model parameter set in a film grain characteristics (FGC) supplemental enhancement information (SEI) message. The model parameter set may be, or may include, a cutoff frequency. The model parameter set may further be, or may further include, amplitude or a scaling factor.

The device may generate a soft frequency window based on the model parameter set. In examples, the soft frequency window may be a 2D low-pass window. In examples, the soft frequency window may be a separable 2D low-pass window. The separable 2D low-pass window may include a 1D low-pass window (e.g., a first 1D low-pass window) that is associated with a vertical dimension and another 1D low-pass window (e.g., a second 1D low-pass window) that is associated with a horizontal dimension. The separable 2D low-pass window may be obtained based on vector multiplication of the first 1D low-pass window and the second 1D low-pass window. In examples, the soft frequency window comprises at least one of a cosine window, a raised cosine window, a Kaiser window, a Butterworth window, and/or the like. In examples, the soft frequency window is a low-pass 2D frequency window. The low-pass 2D frequency window may be obtained based on at least one of vector multiplication of a first 1D low-pass frequency window and a second 1D low-pass window as described herein or based on a multivariate base function.

The device may generate a synthetic grain based on the soft frequency window. For example, the device may generate the synthetic grain based on (e.g., applying it using element-wise multiplication) the soft frequency window and a 2D array of coefficients (e.g., random coefficients) and performing an inverse transform. The inverse transform may be associated with a discrete cosine transform (DCT).

In examples, an energy associated with the soft frequency window may be the same as an energy associated with a rectangular frequency window with the same cutoff frequency.

In examples, the device may determine that a non-zero low cutoff frequency is obtained (e.g., included, signaled, specified, and/or the like) based on the model parameter set. Based on the determination that the non-zero low cutoff frequency is obtained, the device may generate a low-pass 2D window (e.g., a first low-pass 2D window) from a cutoff frequency (e.g., a first cutoff frequency). The first cutoff frequency may be associated with a high cutoff frequency. The device may generate another low-pass 2D window (e.g., a second low-pass 2D window) from another cutoff frequency (e.g., a second cutoff frequency). The second cutoff frequency may be associated with a low cutoff frequency. The device may generate a 2D frequency window based on the first low-pass 2D window and the second low-pass 2D window, wherein the 2D frequency window is obtained based on the differences (e.g., square root of) between squares of the first low-pass 2D window and the second low-pass 2D window.

In examples, the device may determine that a non-zero low cutoff frequency is obtained (e.g., included, signaled, specified, and/or the like) based on the model parameter set. Based on the determination that the non-zero low cutoff frequency is obtained, the device may generate a 2D frequency window based on a multivariate base function.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device comprising:
   a processor configured to:

   obtain a model parameter set, wherein the model parameter set comprises a cutoff frequency;
   generate a soft frequency window based on the model parameter set; and
   generate a synthetic grain based on the soft frequency window.

2. The device of claim 1, wherein the soft frequency window comprises at least one of a 2D low-pass window or a separable 2D low-pass window, wherein the separable 2D low-pass window comprises a first 1D low-pass window associated with a vertical dimension and a second 1D low-pass window associated with a horizontal dimension, and wherein the separable 2D low-pass window is obtained based on a vector multiplication of the first 1D low-pass window and the second 1D low-pass window.

3. The device of claim 1, wherein an energy associated with the soft frequency window is the same as an energy associated with a rectangular frequency window with the same cutoff frequency.

4. The device of claim 1, wherein the soft frequency window comprises at least one of a cosine window, a raised cosine window, a Kaiser window, or a Butterworth window.

5. The device of claim 1, wherein the soft frequency window is a low-pass 2D frequency window, and the low-pass 2D frequency window is obtained based on at least one of a vector multiplication of a first 1D low-pass frequency window and a second 1D low-pass window or a multivariate base function.

6. The device of claim 1, wherein the cutoff frequency comprises a first cutoff frequency and a second cutoff frequency, and wherein the processor is configured to:

   based on the model parameter set, determine that a non-zero low cutoff frequency is obtained;

based on the determination that the non-zero low cutoff frequency is obtained, generate a first low-pass 2D window from the first cutoff frequency, wherein the first cutoff frequency is associated with a high cutoff frequency; generate a second low-pass 2D window from the second cutoff frequency, wherein the second cutoff frequency is associated with a low cutoff frequency; and

generate a 2D frequency window based on the first low-pass 2D window and the second low-pass 2D window, wherein the 2D frequency window is obtained based on differences of squares of the first low-pass 2D window and the second low-pass 2D window.

7. The device of claim 1, wherein the processor is configured to:

based on the model parameter set, determine that a non-zero low cutoff frequency is obtained; and
based on the determination that the non-zero low cutoff frequency is obtained, generate a 2D frequency window based on a multivariate base function.

8. The device of claim 1, wherein the model parameter set further comprises at least one of an amplitude or a scaling factor, wherein the synthetic grain is generated based on an inverse transform of the soft frequency window, and wherein the inverse transform comprises a discrete cosine transform (DCT).

9. The device of claim 1, wherein the model parameter set is obtained in a film grain characteristics (FGC) supplemental enhancement information (SEI) message.

10. A method comprising:

obtaining a model parameter set, wherein the model parameter set comprises a cutoff frequency;
generating a soft frequency window based on the model parameter set; and
generating a synthetic grain based on the soft frequency window.

11. The method of claim 10, wherein the soft frequency window comprises at least one of a 2D low-pass window or a separable 2D low-pass window, wherein the separable 2D low-pass window comprises a first 1D low-pass window associated with a vertical dimension and a second 1D low-pass window associated with a horizontal dimension, and wherein the separable 2D low-pass window is obtained based on a vector multiplication of the first 1D low-pass window and the second 1D low-pass window.

12. The method of claim 10 or 11, wherein an energy associated with the soft frequency window is the same as an energy associated with a rectangular frequency window with the same cutoff frequency, wherein the soft frequency window comprises at least one of a cosine window, a raised cosine window, a Kaiser window, or a Butterworth window, wherein the soft frequency window is a low-pass 2D frequency window, and wherein the low-pass 2D frequency window is obtained based on at least one of a vector multiplication of a first 1D low-pass frequency window and a second 1D low-pass window or a multivariate base function.

13. The method of any one of claims 10-12, wherein the cutoff frequency comprises a first cutoff frequency and a second cutoff frequency, and wherein the method comprises:

based on the model parameter set, determining that a non-zero low cutoff frequency is obtained;
based on the determination that the non-zero low cutoff frequency is obtained, generating a first low-pass 2D window from the first cutoff frequency, wherein the first cutoff frequency is associated with a high cutoff frequency; generating a second low-pass 2D window from the second cutoff frequency, wherein the second cutoff frequency is associated with a low cutoff frequency; and

generating a 2D frequency window based on the first low-pass 2D window and the second low-pass 2D window, wherein the 2D frequency window is obtained based on differences of squares of the first low-pass 2D window and the second low-pass 2D window.

14. The method of any one of claims 10-12, wherein the method comprises:

based on the model parameter set, determining that a non-zero low cutoff frequency is obtained;
based on the determination that the non-zero low cutoff frequency is obtained, generating a 2D frequency window based on a multivariate base function.

15. The method of any one of claims 10-14, wherein the model parameter set further comprises at least one of an amplitude or a scaling factor, wherein the synthetic grain is generated based on an inverse transform of the soft frequency window, wherein the inverse transform comprises a discrete cosine transform (DCT), and wherein the model parameter set is obtained in a film grain characteristics (FGC) supplemental enhancement information (SEI) message.

**FIG. 1**

EP 4 752 827 A1

**FIG. 2**

FIG. 3

Source
video

Bitstream
with metadata

Output
video

Encode

Grain model fitting

Metadata = model
parameters

Decode

Model parameters

Add grain

EP 4 752 827 A1

FIG. 4

**FIG. 5**

```
for (y=0; y<16; y++)
    for (x=0; x<16; x++)
        coeff[y][x] = gauss(sigma)

for (y=0; y<16; y++)
    for (x=0; x<16; x++)
        if ((x < fchL && y < fcvL) || x > fchH || y > fcvH)
            coeff[y][x] = 0

pattern = iDCT2(coeff)
```

**FIG. 6**

EP 4 752 827 A1

Fill a 16x16 DCT2 array with gaussian random numbers of standard deviation « sigma »

Set coefficients with column and row indices lower than horizontal and vertical low cutoff frequencies to zero

Set coefficients with column or row indices either higher than horizontal or vertical high cutoff frequencies to zero

Perform inverse 16x16 DCT2

## FIG. 7

FIG. 8

FIG. 9

**FIG. 10**

EP 4 752 827 A1

FIG. 11

FIG. 12

FIG. 13

EP 4 752 827 A1

Europäisches
Patentamt
European
Patent Office
Office européen
des brevets

# EUROPEAN SEARCH REPORT

**Application Number**

EP 24 30 7009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Stephenson Ian ET AL: "Simulating Film Grain using the Noise-Power Spectrum", , 1 January 2007 (2007-01-01), XP093271006, Retrieved from the Internet: URL:https://eprints.bournemouth.ac.uk/10547/1/grain.pdf | 1,2, 5-11, 13-15 | INV. G06T5/70 |
| A | * section 1 * * section 2.1 * | 3,4,12 | |
| A | VIGNESH V MENON ET AL: "Enhancing Film Grain Coding in VVC: Improving Encoding Quality and Efficiency", ARXIV.ORG, CORNELL UNIVERSITY LIBRARY, 201 OLIN LIBRARY CORNELL UNIVERSITY ITHACA, NY 14853, 17 July 2024 (2024-07-17), XP091824677, * the whole document * | 1-15 | |

**TECHNICAL FIELDS SEARCHED (IPC)**

G06T

The present search report has been drawn up for all claims

| Place of search | Date of completion of the search | Examiner |
|---|---|---|
| Munich | 17 April 2025 | Kollreider, Klaus |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)